Europäisches Patentamt

**European Patent Office**

Office européen des brevets

(11) Publication number: **0 221 872**
A2

# EUROPEAN PATENT APPLICATION

(21) Application number: 86850375.6

(51) Int. Cl.⁴: **B 29 C 33/20**

(22) Date of filing: 27.10.86

(30) Priority: 31.10.85 FI 854274

(43) Date of publication of application:
13.05.87 Bulletin 87/20

(84) Designated Contracting States:
DE FR GB SE

(71) Applicant: AKTIEBOLAGET ELECTROLUX
Luxbacken 1
S-105 45 Stockholm(SE)

(72) Inventor: Syrjälä, Antti
Vienolantie 10
SF-20210 Turku(FI)

(72) Inventor: Lähde, Veli-Pekka
Kannuskatu 3 D 76
SF-20880 Turku(FI)

(74) Representative: Hagelbäck, Evert Isidor et al,
c/o AB Electrolux Patentavdelningen
S-105 45 Stockholm(SE)

(54) Locking and opening device for plastics-casting mould.

(57) A locking and opening device for a plastics-casting mould, by means of which device the halves of a mould intended for the manufacture of plastics articles by casting are locked together for the duration of casting and by means of which after casting said mould halves, which are partially glued together, are separated from each other.

Closing of closing device (4) is performed by means of an actuating device (7) while clamping cushions (3) are unpressurized. When pressure is introduced into clamping cushions (3) closing device (4) prevents the mould from opening.

After casting has taken place pressure is released from clamping cushions (3). Mould halves (1 and 2) then remain together as a consequence of the adhesive and friction effects caused by the cast plastics.

When closing device (4) is subsequently opened by means of actuating device (7) a rod (9) pivotally attached to closing device (4) and to a cam plate (8) pulls said cam plate (8) causing it to rotate about its axle. Thereon cam plate (8) presses against a stop (10) in the lower mould half and thereby forces mould halves (1 and 2) apart from each other. Thereafter the mould halves can be opened by means of actuating device (11).

Fig.1

## Locking and opening device for plastics-casting mould

The invention relates to a device by means of which the halves of a mould intended for the manufacture of plastics articles by casting are locked together during casting and by which after casting said mould halves, which are partially glued together, are separated from each other.

There are prior-known mould closing and opening devices in which the force resulting from the casting pressure tending to open the mould is overcome by a mechanically created clamping force. Opening of the mould after casting is performed by the same device. Since the required forces, both for clamping and for opening, are large the mechanism and its actuating equipment are heavy and expensive.

In the device according to the invention the clamping force is created in a manner known per se by means of introducing fluid pressure into hose-like cushions. The actual closing device is then not subjected during its travel to any clamping force. The actuating equipment of the device can then be made light and inexpensive. Further, said closing device incorporates a separation device by means of which the mould halves, which have become glued to each other during casting, are slightly separated from each other after casting and thus it is not necessary to dimension the actual opening device according to the large separation force.

The device according to the invention is characterized by that which is presented in the Patent Claims.

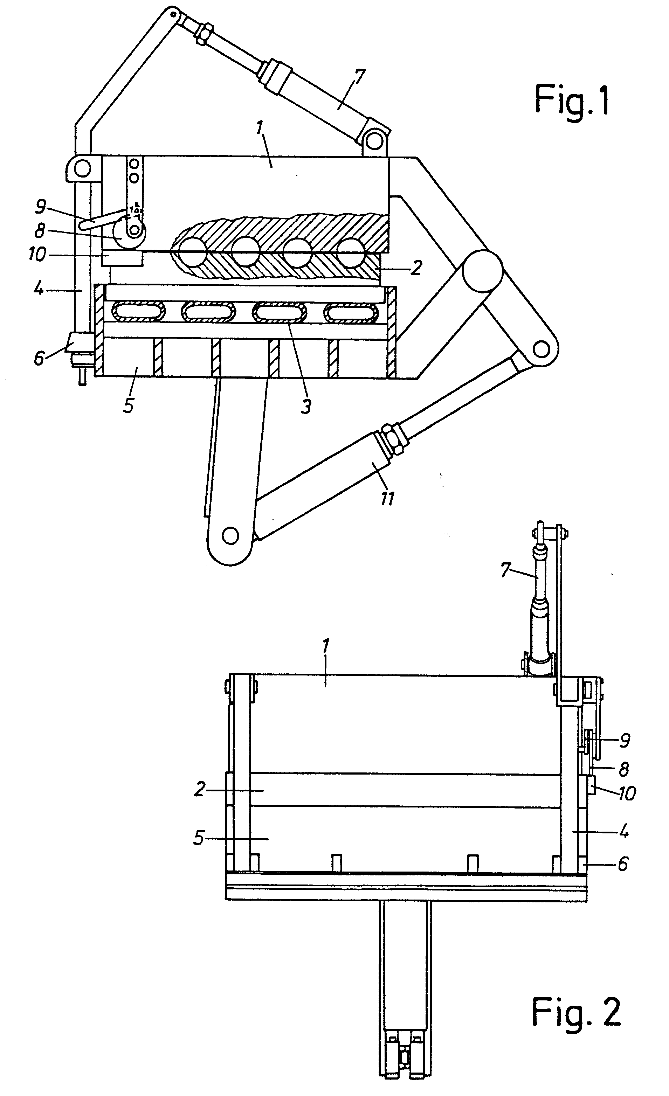

In the following the invention is described with reference to the drawing, wherein Figure 1 shows the mould in the closed position as seen from the side partially sectioned, and Figure 2 shows the mould as seen from the front.

In Figure 1 mould halves 1 and 2 are pressed together by clamping cushions 3.

The mould is prevented from opening by closing device 4 which is hinged at its upper end to the upper mould half and the lower end of which passes underneath lugs 6 fixedly attached to mould body 5. Closing of said closing device 4 is performed by means of a pneumatic or hydraulic cylinder or other actuating device 7 while clamping cushions 3 are unpressurized.

After casting has taken place the pressure is released from clamping cushions 3. Mould halves 1 and 2 then remain together as a consequence of the adhesive and friction effects caused by the cast plastics.

When closing device 4 is subsequently opened by means of actuating device 7 a rod 9 pivotally attached to said closing device 4 and to a cam plate 8 pulls said cam plate 8 causing it to rotate about its axle. Thereon cam plate 8 presses against a stop 10 in the lower mould half and thereby forces mould halves 1 and 2 apart from each other. Thereafter the mould halves can be opened by means of actuating device 11.

As a consequence of the principle of operation of the device the mould halves 1 and 2 together with their closing equipment 3-11 form an integral subassembly from which no opening or closing forces are transmitted to the surrounding frame to which said integral subassembly is attached. This is a substantial advantage when it is desired to turn the mould while it is closed, e.g. because casting is to occur in a different position from that in which removal of the product and cleaning of the mould are carried out.

## Claims

1. A device for locking and opening of halves (1 and 2) of a plastics-casting mould, c h a r a c t e r i z e d in that said device comprises a closing device (4) and a rod (9) pivotally attached to said closing device and at its other end pivotally attached to an eccentrically pivoted cam plate (8), so that when closing device (4) is opened cam plate (8) rotates thereby pressing against a stop (10) and causing mould halves (1 and 2) to separate from each other.

2. A device according to Claim 1, c h a r a c t e r i z e d in that mould halves (1 and 2) together with opening and closing equipment (3-11) form an integral subassembly from which the opening and closing forces are not transmitted to the surrounding frame to which said subassembly is attached.

Fig.1

Fig. 2